# FASCICULE DE BREVET EUROPEEN

(11) **EP 4 045 408 B1**
(45) Date de publication et mention de la délivrance du brevet: **27.09.2023**
(21) Numéro de dépôt: 20797830.5
(22) Date de dépôt: 12.10.2020
(51) Int. Cl.: B64D 29/00, B64D 33/04, F02K 1/00, F02K 1/10

(54) **SYSTÈME PROPULSIF POUR UN AÉRONEF**
ANTRIEBSSYSTEM FÜR EIN FLUGZEUG
PROPULSION SYSTEM FOR AN AIRCRAFT

(30) Priorité: 16.10.2019 FR 1911535
(43) Date de publication de la demande: 24.08.2022
(73) Titulaire: SAFRAN, 75015 Paris (FR); Safran Helicopter Engines, 64510 Bordes (FR)
(72) Inventeur: BESSE, Jean-Louis Robert Guy, 77550 MOISSY-CRAMAYEL (FR); MALDONADO, Ye-Bonne Karina, 77550 MOISSY-CRAMAYEL (FR)
(74) Mandataire: Gevers & Orès
(86) Numéro de dépôt international: PCT/FR2020/051797
(87) Numéro de publication internationale: WO 2021/074513

(56) Documents cités:
- EP-A2- 2 184 481
- FR-A1- 2 310 471
- US-A- 5 328 098
- US-A1- 2011 030 380

## Description

### DOMAINE TECHNIQUE

La présente invention concerne le domaine des systèmes propulsifs pour aéronef. Elle se rapporte notamment à un système propulsif capable de fournir une composante de poussée latérale.

La présente invention concerne également un aéronef comportant un tel système propulsif.

### TECHNIQUE ANTÉRIEURE

L'arrière-plan technique comprend notamment les documents US 2011/030380 A1, EP 2184481 A2, US 5328098 Alet FR 2310471 A1.

Un système propulsif pour aéronef comporte au moins un rotor ou une hélice comportant une pluralité de pales montées sur un arbre tournant.

Il existe des aéronefs, et notamment des Aéronefs à Décollage et Atterrissage Verticaux (ADAV ou VTOL acronyme pour « *Vertical Take-Off and Landing* » en langue anglaise), présentant des systèmes propulsifs à rotors simples lorsqu'ils ne comportent qu'un seul rotor ou contra rotatifs lorsqu'ils comportent des rotors regroupés par paire tournant en sens opposés.

Ces systèmes propulsifs sont soit à rotors carénés (le rotor est alors entouré d'un carénage de nacelle annulaire), soit à rotors libres, les systèmes propulsifs et notamment les rotors (libres ou carénés) pouvant être montés sur un arbre de pivotement permettant l'orientation des systèmes propulsifs et donc des rotors entre une position verticale et une position horizontale, par exemple l'orientation à la verticale pour un décollage ou un atterrissage vertical et l'orientation à l'horizontale pour le vol d'avancement ou mode avion.

Les rotors carénés présentent plusieurs avantages intéressants, tels que :
- une importante diminution de la signature sonore du rotor en émission directe ;
- une protection des pales du rotor vis-à-vis des obstacles alentours ;
- une amélioration des performances du rotor, notamment en vol stationnaire de l'aéronef ou à faible vitesse d'avancement.

Cependant, les aéronefs VTOL à rotors carénés, notamment en vol stationnaire, n'ont pas la même manoeuvrabilité que les hélicoptères classiques.

Pour des hélicoptères classiques, des corrections d'altitude et de placement peuvent être réalisées, dans le trièdre de référence en normes aéronautiques X, Y, Z, par :
- des corrections autour de l'axe de roulis X axe de rotation de l'hélicoptère autour de son axe longitudinal) par une action à gauche ou à droite sur le pas cyclique (agissant sur l'orientation de la poussée du rotor, ici dans un plan perpendiculaire à l'axe X) ;
- des corrections autour de l'axe de tangage Y (axe de de l'hélicoptère autour de son axe transversal) par une action en avant (à piquer) ou en arrière (à cabrer) sur le pas cyclique (agissant sur l'orientation de la poussée du rotor, ici dans un plan perpendiculaire à l'axe Y) ;
- des corrections autour de l'axe de lacet Z (axe de rotation dans un plan horizontal de l'hélicoptère autour de son axe vertical) par action sur le palonnier (agissant sur la poussée du rotor anti-couple de l'hélicoptère) ;
- des corrections en translation longitudinale selon l'axe X du trièdre de référence en normes aéronautiques (axe longitudinal) par une commande du pas cyclique/collectif (agissant sur l'orientation de la poussée du rotor, ici vers l'avant ou vers l'arrière) ;
- des corrections en translation latérale selon l'axe Y du trièdre de référence en normes aéronautiques (axe transversal) par une commande du pas cyclique/collectif, (agissant sur l'orientation de la poussée du rotor, ici vers la droite ou vers la gauche) ;
- des corrections en translation verticale selon l'axe Z de référence par une commande du pas collectif vers le haut, vers le bas (agissant sur la poussée du rotor, mise pas : commande tirée vers le haut).

Bien entendu, des corrections coordonnées du pas collectif et du palonnier, bien connues des pilotes, sont à apporter pour contrer les effets induits de perte de composante de portance et d'effet de couple.

Pour les aéronefs VTOL à rotors carénés, les corrections de positionnement, ou les corrections permettant de contrer des rafales de vent en vol stationnaire, sont généralement complexes et rendent inconfortable le vol pour les passagers de l'aéronef. Par exemple, dans le cas d'un quadrotors (i.e. un aéronef à quatre rotors), afin d'effectuer une correction dans la direction de l'axe X de référence, il est nécessaire de faire basculer l'aéronef vers l'avant autour de l'axe Y de référence (selon l'axe de tangage), puis d'effectuer une correction de la position atteinte (par exemple pour contrer une rafale de vent) et de revenir rapidement à une position neutre, dite « à plat ». De même, afin d'effectuer une correction dans la direction de l'axe Y de référence, il est nécessaire d'incliner, c'est-à-dire de faire rouler, l'aéronef vers et autour de l'axe X de référence (selon l'axe de roulis), puis d'effectuer une correction de la position atteinte et de revenir rapidement à une position neutre. Avec un tel quadrotors, lors d'un transport de passagers, ces derniers peuvent ressentir des balancements avant/arrière et/ou droite/gauche.

Il a été proposé un moteur de turbine à gaz comprenant une tuyère bidimensionnelle comportant un panneau flexible apte à changer de position, sous l'action d'un vérin, de manière à réguler l'échappement du moteur.

Il a également été proposé des moteurs de turbine à gaz comprenant des tuyères à géométries variables, de sorte à faire varier une surface de sortie de la tuyère.

Le document US 2011/030380 A1 décrit un système propulsif comprenant un carénage de nacelle dont un tronçon est réalisé en matériau à mémoire de forme (SMA) actionnable par des actionneurs en fonction de la température.

Ainsi, ces solutions proposées proposent des tuyères dans lesquelles est mise en place la technologie de poussée vectorielle en deux dimensions.

Toutefois, aucune de ces solutions proposées ne propose de mise en place de la technologie de poussée vectorielle en trois dimensions dans des carénages de nacelles de systèmes propulsifs, notamment en mode VTOL à rotors, guidant le flux secondaire issu des dits rotors.

Il existe donc un besoin de fournir une solution simple et efficace aux problèmes évoqués ci-dessus.

Un but de la présente invention est de proposer une solution permettant d'améliorer la manoeuvrabilité des aéronefs de type VTOL, tout en diminuant les impacts de masse et de pertes aéronautiques associés aux commandes de vol.

En particulier, l'invention propose d'améliorer la manoeuvrabilité des aéronefs de type VTOL en fournissant un système propulsif capable de fournir une composante de poussée latéralement à l'axe des rotors.

### RÉSUMÉ DE L'INVENTION

À cet effet, l'invention concerne un système propulsif pour un aéronef, comprenant au moins un rotor et un carénage de nacelle s'étendant autour dudit au moins un rotor par rapport à un axe de rotation dudit rotor, ce carénage de nacelle comprenant un tronçon amont formant une section d'entrée du carénage de nacelle et un tronçon aval dont une extrémité aval forme une section de sortie du carénage de nacelle ; et caractérisé en ce que le tronçon aval comprend une paroi radialement interne et une paroi radialement externe réalisées dans un matériau déformable à mémoire de forme, et en ce que la paroi radialement externe comporte une pluralité de mécanismes actionneurs à au moins un vérin, chaque mécanisme actionneur étant actionnable indépendamment des autres mécanismes actionneurs et étant configuré pour coopérer avec des moyens encastrés dans une surface interne de la paroi radialement externe de sorte à déformer la paroi radialement externe dans une direction radiale par rapport à l'axe de rotation, sous l'effet d'une commande de déplacement prédéterminée.

Le système propulsif selon l'invention peut être à rotor simple ou à rotors contra rotatifs, installés dans une nacelle fixe ou pivotante, à axe de pivotement traversant ou déporté.

Selon l'invention, le carénage est constitué à sa sortie d'air d'un matériau semi-déformable à mémoire de forme et d'une pluralité mécanismes actionneurs à vérins configurés pour faire varier automatiquement la forme de la nacelle et de là, l'orientation du flux d'air en sortie de celle-ci, afin de manoeuvrer l'aéronef sur lequel ladite nacelle est installée.

Le profil du carénage a avantageusement une partie avale semi rigide dont les dimensions et la forme de la section de sortie en bord de fuite peuvent varier, de sorte que la section de sortie en bord de fuite peut être orientée latéralement sous l'effet d'un dispositif commandé, pour former un tube de courant produisant une poussée avec une composante latérale, dite poussée vectorielle ou orientée.

Le système propulsif selon l'invention permet ainsi d'améliorer la manoeuvrabilité de l'aéronef dans lequel il est installé, notamment lors des manoeuvres à faible vitesse d'avancement, comme les décollages et les atterrissages, tout en minimisant les nuisances sonores induites par le rotor du système propulsif et en assurant une sécurité de ce rotor par la présence du carénage de nacelle.

En effet, la forme du carénage est adaptée de façon continue en fonction de la déviation de la poussée commandée pour obtenir un placement précis de l'aéronef. Le profil du carénage peut donc être orienté latéralement en fonction des contraintes mécaniques du vol recherchées en mode VTOL, de sorte à produire une composante de poussée perpendiculaire à l'axe rotor.

Le mécanisme actionneur à vérins permet avantageusement une réalisation relativement rigide de la partie arrière du carénage, et une activation à temps de réponse court.

Lors des phases de vol en mode avion, le mécanisme actionneur à vérins, qui est utile lors des phases à faible vitesse d'avancement, peut être désactivé.

Selon un mode de réalisation, les moyens comprennent une pluralité de prismes répartis sur la surface interne de la paroi radialement externe en au moins une rangée annulaire.

Avantageusement, les prismes peuvent être angulairement équirépartis sur la surface interne de la paroi radialement externe.

Selon un mode de réalisation, les prismes sont actionnés par les vérins par l'intermédiaire d'au moins un élément annulaire.

Avantageusement, les vérins sont angulairement équirépartis dans le tronçon aval.

Selon un mode de réalisation, la pluralité de mécanismes actionneurs à au moins un vérin comporte un premier mécanisme actionneur à au moins un vérin, dans lequel le vérin est configuré pour coopérer avec les moyens de sorte à déformer la paroi radialement externe dans une première direction radiale par rapport à l'axe de rotation, sous l'effet d'une commande de déplacement prédéterminée, et un second mécanisme actionneur à au moins un vérin, dans lequel le vérin est configuré pour coopérer avec les moyens de sorte à déformer la paroi radialement externe dans une deuxième direction qui est opposée à la première direction, sous l'effet d'une commande de déplacement prédéterminée.

Avantageusement, le système propulsif comprend en outre des pontets de rigidification reliant les parois radialement interne et radialement externe du tronçon aval et permettant d'assurer un écart sensiblement constant entre les parois radialement interne et radialement externe du tronçon aval.

Le carénage de nacelle peut comprendre un tronçon amont formant une section d'entrée du carénage de nacelle et un tronçon intermédiaire reliant les tronçons amont et aval.

Avantageusement, le tronçon intermédiaire est rigide et est relié par au moins un mât à un moteur du système propulsif. Cela procure au carénage de nacelle du système propulsif une structure rigide pouvant assurer une fonction de blindage.

La présente invention concerne également un aéronef caractérisé en ce qu'il comporte au moins un système propulsif présentant au moins l'une quelconque des caractéristiques susmentionnées, le système propulsif étant monté pivotant sur l'aéronef par l'intermédiaire d'un arbre de pivotement déporté ou traversant par rapport au rotor.

### BRÈVE DESCRIPTION DES DESSINS

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
[Fig. 1A] la figure 1A a est une vue schématique en perspective d'un premier exemple de réalisation d'un système propulsif montré avec une nacelle montée sur un axe de pivotement déporté, le système propulsif étant en position horizontale ;
[Fig. 1B] la figure 1B est une vue analogue à la figure 1A, illustrant le système propulsif en position verticale ;
[Fig. 1C] la figure 1C est une vue schématique en perspective d'un second exemple de réalisation d'un système propulsif montré avec une nacelle montée sur un axe de pivotement traversant, le système propulsif étant en position horizontale ;
[Fig. 2] la figure 2 est une vue schématique en coupe longitudinale du système propulsif selon l'invention avec son tronçon aval de carénage de nacelle en mode poussée symétrique, c'est-à-dire poussée axiale ;
[Fig. 3-4] les figures 3 et 4 sont des vues analogues à la figure 2 du système propulsif selon l'invention avec son tronçon aval de carénage de nacelle en mode poussée dissymétrique ;
[Fig. 5] la figure 5 est une vue schématique arrière d'un exemple de réalisation du mécanisme actionneur selon l'invention, en mode poussée axiale ;
[Fig. 6-7] les figures 6 et 7 sont des vues schématiques arrières d'un exemple de réalisation du mécanisme actionneur selon l'invention, en mode poussée dissymétrique ; et
[Fig. 8] la figure 8 est une vue schématique en coupe du système propulsif selon un autre mode de réalisation de l'invention avec son tronçon aval de carénage de nacelle en mode poussée axiale.

Les éléments ayant les mêmes fonctions dans les différentes mises en oeuvre ont les mêmes références dans les figures.

### DESCRIPTION DES MODES DE RÉALISATION

Dans le présent exposé, les termes « axial », « interne » et « externe » sont utilisés en référence à l'axe de rotation du système propulsif selon l'invention.

Un système propulsif est généralement constitué :
- d'une nacelle ;
- d'un moteur et de son système de commande et de contrôle ;
- et, dans le cas d'une propulsion à hélice ou rotor, de son hélice ou rotor(s).

La nacelle est l'élément qui permet d'intégrer le moteur à l'aéronef, elle est constituée :
- de carénages de nacelle (permettant de capoter le moteur, de caréner les rotors, de capter l'air en écoulement en fonctionnement de l'aéronef, de créer un effet de poussée, inverser la poussée sur les systèmes propulsifs, ...) ;
- d'équipements à monter sur le moteur (tel l'habillage moteur regroupant les réseaux électriques, hydrauliques, pneumatiques connus sous l'acronyme EBU de l'anglais « *Engine Build-Up* ») ; et
- des systèmes d'accrochage à l'aéronef.

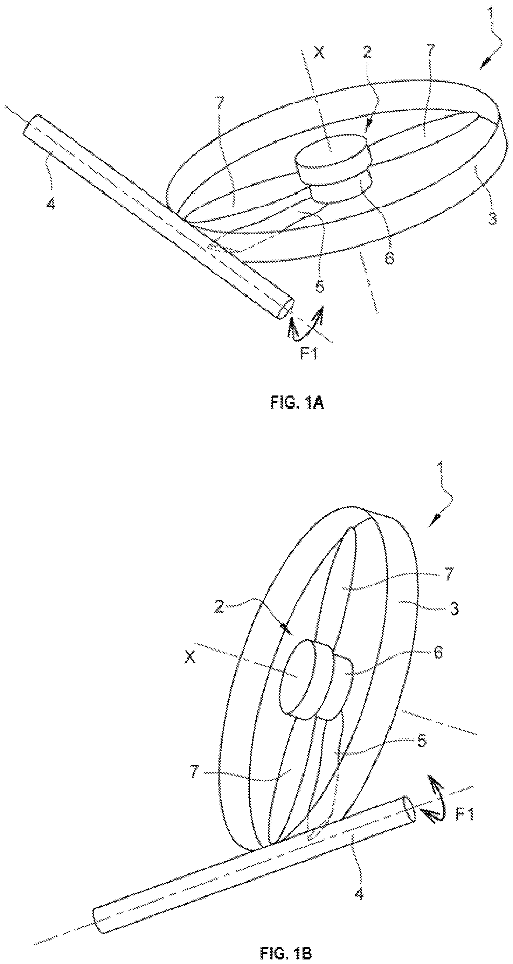

Les figures 1A et 1B illustrent, de manière simplifiée, un premier mode de réalisation d'un système propulsif 1 pour aéronef selon l'invention.

Le système propulsif 1 comprend ici au moins un rotor 2 et un carénage 3 de nacelle s'étendant autour dudit au moins un rotor 2 par rapport à un axe de rotation X du rotor 2. Le carénage 3 fait avantageusement office, par sa forme et ses matériaux, d'écran acoustique. Le système propulsif 1 peut être monté fixe sur l'aéronef. Le système propulsif 1 peut encore être monté sur un arbre de pivotement 4, déporté par rapport à l'axe de rotation X du rotor 2. L'arbre de pivotement 4 est fixé par tout moyen au système propulsif 1, d'une part, et à l'aéronef, d'autre part, et permet l'orientation du système propulsif 1 sur l'aéronef, autorisant le basculement du système propulsif 1 autour de l'arbre de pivotement 4, selon la flèche F1, par l'intermédiaire d'actionneurs connus, entre une position horizontale telle qu'illustrée à la figure 1A, et une position verticale telle qu'illustrée à la figure 1B. Ce basculement permet de faire passer l'aéronef d'un mode classique comme pour un avion, à un mode VTOL ou hélicoptère.

Le rotor 2 du système propulsif 1 est relié à l'aéronef par un mât 5 supportant un moteur 6, par exemple électrique, entraînant en rotation le rotor 2 par l'intermédiaire d'un arbre de puissance, de manière connue en soi. Selon l'exemple illustré nullement limitatif, chaque rotor 2 comprend deux pales 7.

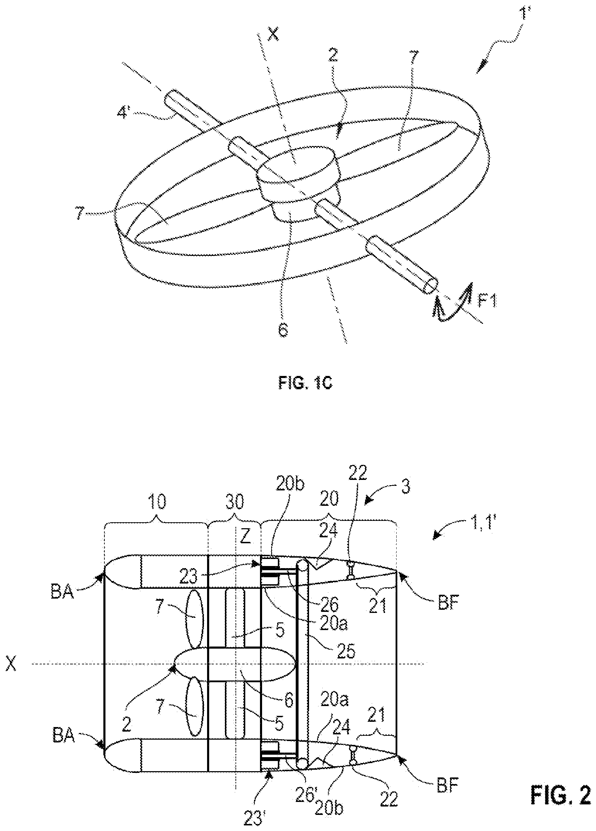

La figure 1C illustre un second mode de réalisation d'un système propulsif 1' pour aéronef selon l'invention dans lequel le système propulsif 1' peut être monté sur un arbre de pivotement 4', traversant le rotor 2 de manière perpendiculaire par rapport à l'axe de rotation X du rotor 2. Le rotor 2 du système propulsif 1' est relié à l'aéronef par un mât 5 supportant un moteur 6, par exemple électrique, entraînant en rotation le rotor 2 par l'intermédiaire d'un arbre de puissance, de manière connue en soi. Selon l'exemple de réalisation représenté, le mât 5 du rotor 2 est confondu avec l'arbre de pivotement 4'.

En référence aux figures 2 à 4, le carénage 3 de nacelle du système propulsif 1, 1' selon l'invention comprend :
- un tronçon amont 10 ;
- un tronçon aval 20 ; et
- un tronçon intermédiaire 30 reliant lesdits tronçons amont 10 et aval 20.

Le tronçon amont 10 forme une section d'entrée (ou dit autrement un bord d'attaque) BA ou entrée d'air du carénage 3 de nacelle.

Le tronçon amont 10 est réalisé dans un matériau pouvant supporter des températures le rendant apte à assurer une fonction d'antigivrage lorsqu'il est approvisionné en air chaud.

Le tronçon intermédiaire 30 est rigide. Il est par exemple réalisé en alliage d'aluminium, en titane chargé 6% aluminium et 4% vanadium (TA6V), ou en composite fibre de carbone à matrice organique. Le tronçon intermédiaire 30 est avantageusement relié au moteur 6 du système propulsif 1, 1' par au moins un mât 5, et, de préférence, par deux mâts 5 de sorte à solidariser mécaniquement le carénage 3 de nacelle au moteur 6 du système propulsif 1, 1'. Le tronçon intermédiaire 30 confère ainsi, par son matériau et sa configuration, une fonction de blindage au système propulsif 1, 1'.

Une extrémité aval 21 du tronçon aval 20 forme une section de sortie (ou dit autrement un bord de fuite) BF ou une sortie d'air du carénage 3 de nacelle.

Le tronçon aval 20 comprend une paroi radialement interne 20a et une paroi radialement externe 20b. Les parois radialement interne 20a et radialement externe 20b du tronçon aval 20 assurent non seulement une fonction structurante du tronçon aval 20 mais également une fonction aérodynamique.

Les parois radialement interne 20a et radialement externe 20b du tronçon aval 20 sont réalisées dans un matériau déformable semi rigide à mémoire de forme. Autrement dit, le matériau constituant les parois radialement interne 20a et radialement externe 20b du tronçon aval 20 est à la fois rigide pour conférer au tronçon aval 20 une forme structurante et souple pour conférer au tronçon aval 20 une possibilité de déformation. Ainsi, les parois radialement interne 20a et radialement externe 20b du tronçon aval 20 sont réalisées dans un matériau apte à réagir sous l'effet d'actionneurs tels que décrits ci-après. Lorsque les parois radialement interne 20a et radialement externe 20b du tronçon aval 20 sont excitées par un ou des actionneurs, les parois se déforment et lorsque la contrainte d'excitation du ou des actionneurs s'arrête, les parois reprennent leur forme initiale. Par exemple, les parois radialement interne 20a et externe 20b sont réalisées en composite ou en un alliage de nickel et titane (encore connu sous le nom « Kiokalloy ») tel que le NiTiNol ou le NiTiCu.

Le matériau à mémoire de forme constituant les parois radialement interne 20a et externe 20b est à sureté intégrée, c'est-à-dire qu'il est tel, que sa position de repos, autrement dit lorsqu'aucun actionneur n'agit sur le matériau à mémoire de forme en vue de sa déformation, correspond à une géométrie naturelle de stockage dudit matériau ou de plus longue durée d'utilisation. Ainsi, en cas de panne de l'actionneur, le matériau à mémoire de forme reprendra sa forme naturelle au repos et le carénage 3 de nacelle reprendra une géométrie sécurisée assurant une poussée axiale pour assurer le bon fonctionnement du système propulsif 1, 1' de l'aéronef.

Les parois radialement interne 20a et externe 20b peuvent également présenter une épaisseur variable axialement et également azimutalement à proximité de pontets de rigidification 22 de sorte à modifier localement l'élasticité de la structure. Il est en outre possible d'optimiser localement les caractéristiques mécaniques du matériau à mémoire de forme constituant les parois radialement interne 20a et externe 20b en fonction des propriétés locales souhaitées le long du tronçon aval 20. Ainsi, il peut être envisagé que le tronçon aval 20 soit constitué d'une pluralité de tronçons de matériaux différents.

Le tronçon aval 20 étant réalisé dans un matériau déformable, semi-rigide lui garantissant une forme structurale rigide de sorte à éviter son affaissement tant au repos que sous l'action d'un écoulement d'air en fonctionnement du système propulsif 1, 1' et permettant ainsi au carénage 3 de nacelle de conserver un profil aérodynamique homogène de sa section de sortie BF. Avantageusement, l'extrémité aval 21 du tronçon aval 20 peut être réalisée en un matériau orthotrope présentant des modules élastiques adéquats.

De plus, afin d'assurer un écart sensiblement constant entre les parois radialement interne 20a et radialement externe 20b du tronçon aval 20, des pontets de rigidification 22 sont ménagés angulairement à intervalles réguliers entre ces parois 20a, 20b.

Un but de la présente invention est de pouvoir bénéficier d'un carénage 3 de nacelle du système propulsif 1, 1' dont il est possible de faire varier la section de sortie BF, ainsi que la forme de cette dernière, de manière à orienter la poussée du système propulsif.

Ainsi, le tronçon aval 20 comprend des moyens permettant de faire varier la forme de la section de sortie BF.

A cet effet, le tronçon aval 20 comporte une pluralité de mécanismes actionneurs à vérins 23, 23'. Par exemple, le système propulsif 1, 1' peut comprendre deux mécanismes actionneurs à vérins 23, 23', l'un étant par exemple positionné angulairement à 6 heures, en référence à un cadran horaire, (c'est-à-dire en position basse) lorsque le système propulsif 1, 1' est monté sur un aéronef, l'autre étant diamétralement opposé, c'est-à-dire positionné à 12 heures, en référence à un cadran horaire, (c'est-à-dire en position haute). Chaque mécanisme actionneur 23, 23' est configuré pour coopérer avec des moyens 24 solidaires d'une surface interne 20b' de la paroi radialement externe 20b, de sorte à déformer la paroi radialement externe 20b dans une direction radiale à l'axe X de rotation, sous l'effet d'une commande de déplacement prédéterminée.

Plus précisément, pour chaque mécanisme actionneur 23, 23', un bras 26, 26' de vérin est configuré pour sortir ou rentrer sous l'effet de la commande de déplacement de sorte à agir sur les moyens 24 et déplacer ces derniers radialement, provoquant une poussée sur la surface radialement interne 20b' de la paroi radialement externe 20b et ainsi faire varier les dimensions et la forme de la section de sortie BF. Chaque vérin 23, 23' peut être dans un état rétracté ou dans un état de pleine extension. Le mécanisme actionneur à vérin 23, 23' peut être électrique, hydraulique, pneumatique ou encore un système vis-écrou.

Les moyens 24 sont agencés sur des secteurs angulaires consécutifs différents autour de l'axe X. Un ou plusieurs prismes peuvent être associés à un même secteur angulaire prédéterminé. Chaque mécanisme actionneur 23, 23' coopère avec des moyens 24 qui sont en regard du vérin 23, 23', et qui sont donc associés à un secteur angulaire prédéterminé, de sorte à déformer la paroi radialement externe 20b dans une direction qui est radiale à l'axe X de rotation et qui est centrée angulairement sur le secteur angulaire prédéterminé sur lequel s'étendent les prismes associés au vérin. Les moyens 24 sont par exemple encastrés (par exemple par vulcanisation) dans la surface radialement interne 20b' de la paroi radialement externe 20b et se déplacent radialement sous l'action des mécanismes actionneurs à vérins 23, 23'.

Selon un exemple de réalisation, les moyens 24 comprennent une pluralité de prismes, par exemple de section triangulaire, répartis en au moins une rangée annulaire, cette pluralité de prismes étant actionnée par les vérins 23, 23' par l'intermédiaire d'au moins un élément annulaire 25.

De préférence, les prismes 24 sont angulairement équirépartis sur la surface radialement interne 20b' de la paroi radialement externe 20b.

Avantageusement, les faces en contact des prismes 24 et de l'élément annulaire 25 sont recouvertes d'un revêtement anti-friction.

Chaque mécanisme actionneur 23, 23', et plus précisément chaque vérin, est actionnable indépendamment des autres mécanismes actionneurs, et est configuré pour déformer la paroi radialement externe dans une direction radiale par rapport à l'axe X de rotation, sous l'effet d'une commande de déplacement prédéterminée. Pour cela, chaque mécanisme actionneur 23, 23' est relié à un dispositif automatique permettant d'actionner ou non le vérin 23, 23' par application d'une commande de déplacement adaptée selon la configuration désirée pour le carénage 3 de nacelle pour obtenir la composante de poussée latérale voulue. En particulier, le dispositif automatique actionne les mécanismes actionneurs, et donc les vérins 23, 23', indépendamment des autres mécanismes actionneurs (et donc des autres vérins).

De préférence, les vérins 23, 23' sont angulairement équirépartis dans le tronçon aval 20.

Selon l'exemple de réalisation illustré aux figures 2 à 7, le système propulsif 1, 1' comporte deux mécanismes actionneurs à vérins 23, 23': un premier mécanisme actionneur à un vérin 23 s'étendant dans une première partie (la partie haute sur les figures) du tronçon aval 20, et un second mécanisme actionneur à un vérin 23' s'étendant dans une seconde partie (la partie basse sur les figures) du tronçon aval 20. Sur les figures, les mécanismes actionneurs à vérins sont présentés dans la partie supérieure (haute) et la partie inférieure (basse) du tronçon aval, mais peuvent bien entendu être intégrés dans des secteurs angulaires différents (par exemple à droite et à gauche sur les vues de l'arrière), ces secteurs angulaires dépendant de l'orientation du système propulsif lors de son installation sur l'aéronef. Bien entendu, l'invention n'est nullement limitée à cet exemple de réalisation, et le système propulsif 1, 1' peut comporter plus de mécanismes actionneurs à vérins.

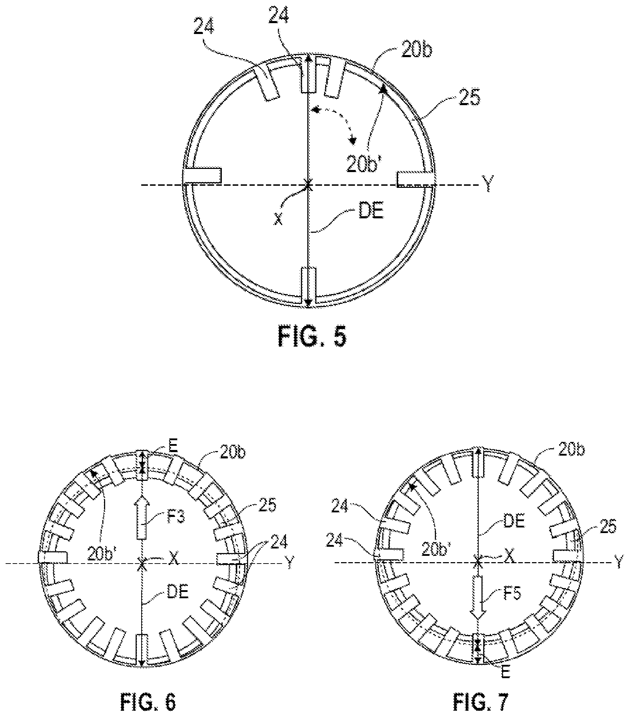

La figure 2 représente un système propulsif 1, 1' selon l'invention dont le carénage 3 de nacelle est montré en position neutre, c'est-à-dire en poussée axiale pure. La figure 5 représente les vérins 23, 23' dans cette position neutre. Les bras 26, 26' des vérins 23, 23' des mécanismes actionneurs à vérins 23, 23' sont entièrement rentrés.

La paroi radialement interne 20a et la paroi radialement externe 20b sont dans un état d'extension nulle (autrement dit, les parois 20a et 20b sont au repos). La déformation locale de la paroi radialement externe 20b est alors nulle.

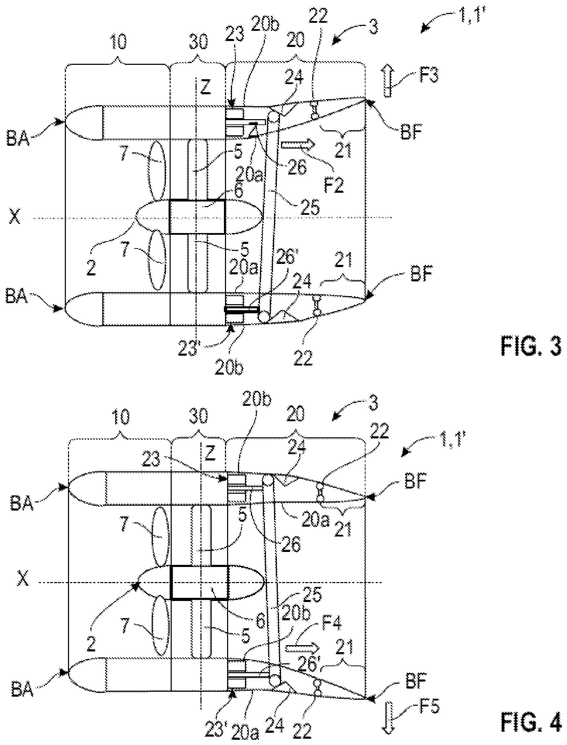

La figure 3 représente un système propulsif 1, 1' selon l'invention dont le carénage 3 de nacelle est montré dans une position où le flux est dévié vers le haut. La figure 6 représente la paroi radialement externe 20b et les prismes 24 lorsque les mécanismes actionneurs à vérins 23, 23' sont dans une position de poussée dissymétrique vers le bas. Une commande pour créer un déplacement de la nacelle vers le bas nécessite de déformer la section de sortie de la nacelle vers le haut, de façon à créer une force orientée du haut vers le bas. Le mécanisme actionneur à vérins 23 est actionné. Plus précisément, une consigne d'extension est calculée en fonction de l'entrée de la commande de vol, puis est envoyée au mécanisme actionneur à vérins 23. L'actionnement du mécanisme actionneur à vérins 23 entraine la sortie du bras 26 de vérin, qui entraine le déplacement axial de la partie supérieure de l'élément annulaire 25 (dans le sens de la flèche F2 sur la figure 3), qui elle-même entraine le déplacement radialement externe de la rangée de prismes 24 en vis-à-vis (dans le sens de la flèche F3 sur les figures 3 et 6). En particulier, l'élément annulaire 25 se déplace sur les faces des primes 24 en regard du vérin 23 de sorte à être, en position neutre du tronçon aval 20 du carénage 3 de nacelle, dans une position affleurant la surface interne 20b' de la paroi radialement externe 20b et, en position dissymétrique du tronçon aval 20 du carénage 3 de nacelle, dans une position proche des sommets des primes 24 en regard du vérin 23. Les prismes 24 étant encastrés dans la surface radialement interne 20b' de la paroi radialement externe 20b et l'élément annulaire 25 étant rigide, les dimensions de la partie supérieure de la paroi radialement interne 20a augmentent sous l'effet de la poussée radiale des prismes 24. Cette augmentation des dimensions induit une modification de la forme de la partie supérieure de la section de sortie BF. En effet, les parois radialement interne 20a et radialement externe 20b du tronçon aval 20 étant réalisées dans un matériau déformable, la modification de la géométrie de la paroi radialement externe 20b entraine la modification de la géométrie de la paroi radialement interne 20a, grâce notamment aux pontets 22, ayant pour effet de faire passer le tronçon aval du carénage 3 de nacelle à une configuration dissymétrique telle qu'illustrée en figure 6. La coopération entre le vérin 23, l'élément annulaire 25 et les prismes 24 déforme la paroi radialement externe 20b dans une direction radiale (flèche F3 sur la figure 6) par rapport à l'axe X de rotation et centrée angulairement par rapport au secteur angulaire sur lequel les prismes 24 associés au vérin 23 s'étendent, c'est-à-dire verticalement et vers le haut sur la figure 6. Le vérin 23 est donc activé, tandis que le vérin 23' n'est pas activé. Autrement dit, le vérin 23' est en position de repos. En particulier, la partie inférieure de l'élément annulaire 25 ne se déplace pas sur les faces des primes 24 en regard du vérin 23'. L'actionnement du vérin 23 a pour conséquence une déformation locale, c'est-à-dire une expansion E radiale et locale de la section de sortie BF. La section de sortie du carénage est donc dissymétrique, et sa forme résulte des caractéristiques mécaniques de la structure soumise à la poussée du vérin 23. Lorsque le vérin 23 est activé, il y a une expansion E radiale et locale de la section de sortie BF du carénage 3, c'est-à-dire que l'on observe une flèche locale de la structure du côté du vérin activé. La dimension radiale (dans la direction de la flèche F3) de l'ensemble des mécanismes actionneurs à vérins 23, 23' (le vérin 23 étant activé et le vérin 23' étant au repos) est égale à la somme de la dimension radiale DE de la paroi radialement externe 20b lorsque les mécanismes actionneurs à vérins sont au repos et de l'expansion E. La paroi radialement externe 20b forme un anneau, dont une partie (ici la partie supérieure) est déformée. Il y a une augmentation radiale et locale de la paroi radialement externe 20b (au niveau des prismes 24 qui sont en regard du vérin 23 supérieur qui est actionné).

La figure 4 représente un système propulsif 1, 1' selon l'invention dont le carénage 3 de nacelle est montré dans une position où le flux est dévié vers le bas. La figure 7 représente la paroi radialement externe 20b et les prismes 24 lorsque les mécanismes actionneurs à vérins 23, 23' sont dans une position de poussée dissymétrique vers le haut. Une commande pour créer un déplacement de la nacelle vers le haut nécessite de déformer la section de sortie de la nacelle vers le bas, de façon à créer une force orientée du bas vers le haut. Le mécanisme actionneur à vérins 23' st actionné. Plus précisément, une consigne d'extension est calculée en fonction de l'entrée de la commande de vol, puis est envoyée au mécanisme actionneur à vérins 23'. L'actionnement du mécanisme actionneur à vérins 23' entraine la sortie du bras 26' de vérin, qui entraine le déplacement axial de la partie inférieure de l'élément annulaire 25 (dans le sens de la flèche F4 sur la figure 4), qui lui-même entraine le déplacement radialement externe de la rangée de prismes 24 (dans le sens de la flèche F5 sur les figures 4 et 7). En particulier, l'élément annulaire 25 se déplace sur les faces des primes 24 en regard du vérin 23' de sorte à être, en position neutre du tronçon aval 20 du carénage 3 de nacelle, dans une position affleurant la surface interne 20b' de la paroi radialement externe 20b et, en position dissymétrique du tronçon aval 20 du carénage 3 de nacelle, dans une position proche des sommets des primes 24 en regard du vérin 23'. Les prismes 24 étant encastrés dans la surface radialement interne 20b' de la paroi radialement externe 20b et l'élément annulaire 25 étant rigide, les dimensions de la partie supérieure de la paroi radialement interne 20a augmentent sous l'effet de la poussée radiale des prismes 24. Cette augmentation des dimensions induit une modification de la forme de la partie inférieure de la section de sortie BF. En effet, les parois radialement interne 20a et radialement externe 20b du tronçon aval 20 étant réalisées dans un matériau déformable, la modification de la géométrie de la paroi radialement externe 20b entraine la modification de la géométrie de la paroi radialement interne 20a, grâce notamment aux pontets 22, ayant pour effet de faire passer le tronçon aval du carénage 3 de nacelle à une configuration dissymétrique telle qu'illustrée en figure 7. La coopération entre le vérin 23', l'élément annulaire 25 et les prismes 24 déforme la paroi radialement externe 20b dans une direction radiale (flèche F5 sur la figure 7) par rapport à l'axe X de rotation et centrée angulairement par rapport au secteur angulaire sur lequel les prismes 24 associés au vérin 23' s'étendent, c'est-à-dire verticalement et vers le bas sur la figure 7. Le vérin 23' est donc activé, tandis que le vérin 23 n'est pas activé. Autrement dit, le vérin 23 est en position de repos. En particulier, la partie supérieure de l'élément annulaire 25 ne se déplace pas sur les faces des primes 24 en regard du vérin 23. L'actionnement du vérin 23' a pour conséquence une déformation locale, c'est-à-dire une expansion E radiale et locale de la section de sortie BF. La section de sortie du carénage est donc dissymétrique, et sa forme résulte des caractéristiques mécaniques de la structure soumise à la poussée du vérin 23'. Lorsque le vérin 23' est activé, il y a une expansion E radiale et locale de la section de sortie BF du carénage 3, c'est-à-dire que l'on observe une flèche locale de la structure du côté du vérin activé. La dimension radiale (dans la direction de la flèche F5) de l'ensemble des mécanismes actionneurs à vérins 23, 23' (le vérin 23 étant au repos et le vérin 23' étant activé) est égale à la somme de la dimension radiale DE de la paroi radialement externe 20b lorsque les mécanismes actionneurs à vérins sont au repos et de l'expansion E. La paroi radialement externe 20b forme un anneau, dont une partie (ici la partie inférieure) est déformée. Il y a une augmentation radiale et locale de la paroi radialement externe 20b (au niveau des prismes 24 qui sont en regard du vérin 23' inférieur qui est actionné).

L'augmentation progressive de l'extension des vérins induite par le dispositif automatique fait varier progressivement la forme et les dimensions de la section de sortie BF. En particulier, il y a une déformation, radialement à l'axe X et localement, des parois radialement interne 20a et radialement externe 20b en matériau déformable à mémoire de forme du tronçon aval 20 associées aux prismes en regard du vérin actionné. Ceci fait, par conséquent, varier les dimensions et la forme de la section de sortie BF qui passe ainsi d'une dimension radiale minimale DE et d'une forme circulaire dans la configuration en mode poussée axiale telle qu'illustrée à la figure 2 à une dimension radiale DE + E supérieure à la dimension radiale minimale DE, avec une déformation dans au moins une direction radiale de la forme circulaire de l'ensemble des actionneurs dans la configuration en mode poussée dissymétrique du carénage 3 de nacelle telle qu'illustrée aux figures 3 et 4.

De même, la réduction progressive de de l'extension des vérins induite par le dispositif automatique fait passer progressivement le carénage 3 de nacelle d'une configuration en mode poussée dissymétrique telle qu'illustrée aux figures 3 et 4 à une configuration en mode poussée axiale telle qu'illustrée à la figure 2.

Le passage de la configuration de la figure 5 à la configuration de la figure 6 ou de la figure 7 du tronçon aval 20 du carénage 3 de nacelle, et inversement, se fait en continu en fonction de la sortie ou de la rentrée du bras 26, 26' de vérin 23, 23' du mécanisme actionneur à vérins induite par le dispositif automatique, les pontets de rigidification 22 assurant un écart sensiblement constant entre les parois radialement interne 20a et radialement externe 20b du tronçon aval 20 lors des changements de configuration de la section (dimensions et forme) de sortie BF du carénage 3 de nacelle.

Selon un mode de réalisation, le système propulsif 1, 1' peut comprendre plusieurs rangées de prismes 24, 24' et plusieurs mécanismes actionneurs à vérins 23, 23' pour chaque rangée annulaire de prismes 24, 24', indépendants les uns des autres.

Avantageusement mais non limitativement, chaque rangée annulaire peut comprendre au moins quatre prismes 24, 24' répartis azimutalement de manière équidistante le long de la surface radialement interne 20b' de la paroi radialement externe 20b du tronçon aval 20.

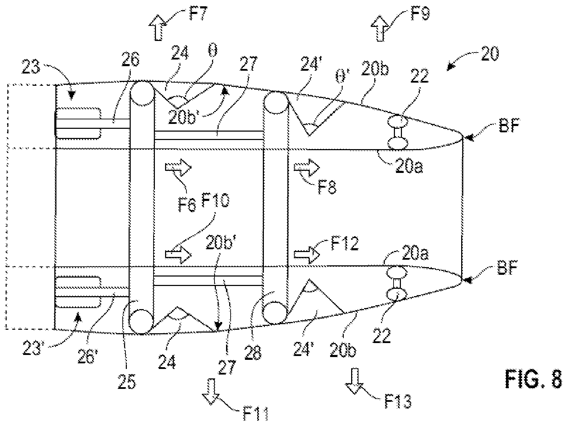

En référence à la figure 8, les moyens 24, 24' peuvent comprendre une pluralité de prismes, par exemple de section triangulaire, répartis en deux rangées annulaires. Une première rangée annulaire de prismes 24 est reliée au bras ou à chaque bras 26, 26' de vérin 23, 23' des mécanismes actionneurs à vérins 23, 23' par l'intermédiaire d'un premier élément annulaire 25. Une seconde rangée annulaire de prismes 24' est reliée à la première rangée annulaire de prismes 24, et plus précisément au premier élément annulaire 25 par l'intermédiaire d'un second élément annulaire 28 et d'une pluralité de tiges 27 (ici disposées à 12 heures et à 6 heures). Les prismes 24, 24', les éléments annulaires 25, 28 et les tiges de liaison 27 sont réalisés dans un matériau rigide, par exemple métallique.

De préférence, le tronçon aval 20 comprend au moins deux moyens 24, 24' angulairement équirépartis, c'est-à-dire répartis de façon équidistante (par exemple positionné angulairement à 6 heures et 12 heures), pour notamment pousser les éléments annulaires 25, 28 et les tiges de liaison 27.

Comme cela est visible sur la figure 8, les prismes 24 de la première rangée annulaire (qui est la plus proche du tronçon intermédiaire 30) et les prismes 24' de la seconde rangée annulaire (qui est la plus proche de la section de sortie BF) présentent des dimensions différentes. Notamment, les prismes 24' présentent un angle au sommet θ' inférieur à l'angle au sommet θ des prismes 24. En effet, pour faire passer le tronçon aval 20 du carénage 3 de nacelle d'une position neutre à une position dissymétrique, les parois interne 20a et externe 20b subissent des déplacements d'amplitude variable augmentant en se rapprochant de la section de sortie, les prismes 24, 24' étant ainsi configurés pour permettre cette amplitude variable de déplacement radial des parois interne 20a et externe 20b pour un même déplacement axial des éléments annulaires 25, 28.

Afin de dévier le flux vers le haut par exemple, le mécanisme actionneur à vérins 23 est actionné. L'actionnement du mécanisme actionneur à vérins 23 entraine la sortie du bras 26 de vérin, qui entraine le déplacement axial de l'élément annulaire 25 (dans le sens de la flèche F6), qui lui-même entraine le déplacement radialement externe de la rangée de prismes 24 (dans le sens de la flèche F7) et le déplacement axial des tiges 27 ainsi que du second élément annulaire 28 (dans le sens de la flèche F8), qui lui-même entraine le déplacement radialement externe de la seconde rangée de prismes 24' (dans le sens de la flèche F9). Les prismes 24, 24' étant encastrés dans la surface radialement interne 20b' de la paroi radialement externe 20b et les éléments annulaires 25, 28 étant rigide, les dimensions de la partie supérieure de la paroi radialement interne 20a augmentent sous l'effet de la poussée radiale des prismes 24, 24'. Cette augmentation des dimensions induit une modification de la forme, de la partie supérieure de la section de sortie BF. La coopération entre le vérin 23, les éléments annulaires 25, 28, les tiges 27 et les prismes 24, 24' déforme la paroi radialement externe 20b dans une direction radiale par rapport à l'axe X de rotation et centrée angulairement par rapport au secteur angulaire sur lequel les prismes 24, 24' associés au vérin 23 s'étendent. Le vérin 23 est donc activé, tandis que le vérin 23' n'est pas activé. En particulier, les parties inférieures des éléments annulaires 25, 28 ne se déplacent pas sur les faces des primes 24, 24' en regard du vérin 23'. L'actionnement du vérin 23 a pour conséquence une déformation locale, c'est-à-dire une expansion radiale et locale de la section de sortie BF. Il y a une augmentation radiale locale de la paroi radialement externe 20b(au niveau des prismes 24, 24' qui sont en regard du vérin 23 qui est actionné).

Afin de dévier le flux vers le bas par exemple, le mécanisme actionneur à vérins 23' est actionné. L'actionnement du mécanisme actionneur à vérins 23' entraine la sortie du bras 26' de vérin, qui entraine le déplacement axial de l'élément annulaire 25 (dans le sens de la flèche F10), qui lui-même entraine le déplacement radialement externe de la rangée de prismes 24 (dans le sens de la flèche F11) et le déplacement axial des tiges 27 ainsi que du second élément annulaire 28 (dans le sens de la flèche F12), qui lui-même entraine le déplacement radialement externe de la seconde rangée de prismes 24' (dans le sens de la flèche F13). Les prismes 24, 24' étant encastrés dans la surface radialement interne 20b' de la paroi radialement externe 20b et les éléments annulaires 25, 28 étant rigide, les dimensions de la partie inférieure de la paroi radialement interne 20a augmentent sous l'effet de la poussée radiale des prismes 24, 24'. Cette augmentation des dimensions induit une modification de la forme, de la partie inférieure de la section de sortie BF. La coopération entre le vérin 23', les éléments annulaires 25, 28, les tiges 27 et les prismes 24, 24' déforme la paroi radialement externe 20b dans une direction radiale par rapport à l'axe X de rotation et centrée angulairement par rapport au secteur angulaire sur lequel les prismes 24, 24' associés au vérin 23' s'étendent. Le vérin 23' est donc activé, tandis que le vérin 23 n'est pas activé. En particulier, les parties supérieures des éléments annulaires 25, 28 ne se déplacent pas sur les faces des primes 24, 24' en regard du vérin 23. L'actionnement du vérin 23' a pour conséquence une déformation locale, c'est-à-dire une expansion radiale et locale de la section de sortie BF. Il y a une augmentation radiale locale de la paroi radialement externe 20b(au niveau des prismes 24, 24' qui sont en regard du vérin 23' qui est actionné).

L'invention a principalement été décrite pour un système propulsif comportant un élément annulaire et deux vérins, mais le système propulsif peut bien entendu comporter une pluralité d'éléments annulaires et plus de vérins.

## Revendications

1. Système propulsif (1, 1') pour un aéronef, comprenant au moins un rotor (2) et un carénage (3) de nacelle s'étendant autour dudit au moins un rotor (2) par rapport à un axe (X) de rotation dudit rotor (2), ce carénage (3) de nacelle comprenant un tronçon amont formant une section d'entrée du carénage de nacelle et un tronçon aval (20) dont une extrémité aval (21) forme une section de sortie (BF) du carénage (3) de nacelle ; le tronçon aval (20) comprenant une paroi radialement interne (20a) et une paroi radialement externe (20b) réalisées dans un matériau déformable à mémoire de forme, et **caractérisé en ce que** la paroi radialement externe (20b) comporte une pluralité de mécanismes actionneurs à au moins un vérin (23, 23'), chaque mécanisme actionneur étant actionnable indépendamment des autres mécanismes actionneurs et étant configuré pour coopérer avec des moyens (24, 24') encastrés dans une surface interne (20b') de la paroi radialement externe (20b) de sorte à déformer la paroi radialement externe (20b) dans une direction radiale par rapport à l'axe (X) de rotation, sous l'effet d'une commande de déplacement prédéterminée.

2. Système propulsif (1, 1') selon la revendication 1, dans lequel les moyens (24, 24') comprennent une pluralité de prismes répartis sur la surface interne (20b') de la paroi radialement externe (20b) en au moins une rangée annulaire.

3. Système propulsif (1, 1') selon la revendication 2, dans lequel les prismes sont angulairement équirépartis sur la surface interne (20b') de la paroi radialement externe (20b).

4. Système propulsif (1, 1') selon l'une des revendications 1 ou 2, dans lequel les prismes sont actionnés par les vérins (23, 23') par l'intermédiaire d'au moins un élément annulaire (25, 28).

5. Système propulsif (1, 1') selon l'une des revendications précédentes, dans lequel les vérins (23, 23') sont angulairement équirépartis dans le tronçon aval (20).

6. Système propulsif (1, 1') selon l'une des revendications précédentes, dans lequel la pluralité de mécanismes actionneurs à au moins un vérin comporte un premier mécanisme actionneur à au moins un vérin (23) dans lequel le vérin (23) est configuré pour coopérer avec les moyens (24, 24') de sorte à déformer la paroi radialement externe (20b) dans une première direction radiale par rapport à l'axe (X) de rotation, sous l'effet d'une commande de déplacement prédéterminée, et un second mécanisme actionneur à au moins un vérin (23') dans lequel le vérin (23') est configuré pour coopérer avec les moyens (24, 24') de sorte à déformer la paroi radialement externe (20b) dans une deuxième direction qui est opposée à la première direction, sous l'effet d'une commande de déplacement prédéterminée.

7. Système propulsif (1, 1') selon l'une des revendications précédentes, comprenant en outre des pontets (22) de rigidification reliant les parois radialement interne (20a) et radialement externe (20b) du tronçon aval (20).

8. Système propulsif (1, 1') selon l'une des revendications précédentes, dans lequel le carénage de nacelle comprend également un tronçon amont (10) formant une section d'entrée du carénage de nacelle et un tronçon intermédiaire (30) reliant les tronçons amont (10) et aval (20), et dans lequel le tronçon intermédiaire (30) est rigide et est relié par au moins un mât (5) à un moteur (6) du système propulsif (1, 1').

9. Aéronef **caractérisé en ce qu'**il comporte au moins un système propulsif (1, 1') selon l'une quelconque des revendications précédentes, le système propulsif (1, 1') étant monté pivotant sur l'aéronef par l'intermédiaire d'un arbre de pivotement (4, 4') déporté ou traversant par rapport au rotor (2).

## Patentansprüche

1. Antriebssystem (1,1') für ein Flugzeug, umfassend mindestens einen Rotor (2) und eine Gondelverkleidung (3), die sich um den mindestens einen Rotor (2) in Bezug auf eine Drehachse (X) des Rotors (2) erstreckt, wobei diese Gondelverkleidung (3) einen stromaufwärtigen Teilabschnitt umfasst, der einen Eintrittsabschnitt der Gondelverkleidung bildet, und einen stromabwärtigen Teilabschnitt (20), bei dem ein stromabwärtiges Ende (21) einen Austrittsabschnitt (BF) der Gondelverkleidung (3) bildet; wobei der stromabwärtige Teilabschnitt (20) eine radial innere Wand (20a) und eine radial äußere Wand (20b) umfasst, die in einem verformbarem Material mit Formgedächtnis bildet sind, und **dadurch gekennzeichnet, dass** die radial äußere Wand (20b) eine Vielzahl von Aktuatormechanismen mit mindestens einem Zylinder (23, 23') umfasst, wobei jeder Aktuatormechanismus unabhängig von den anderen Aktuatormechanismen betätigbar ist und konfiguriert ist, um mit Mitteln (24, 24'), die in einer Innenfläche (20b') der radial äußeren Wand (20b) eingelassen sind, derart zusammenzuwirken, dass die radial äußere Wand (20b) unter der Einwirkung einer vorbestimmten Verschiebungssteuerung in Bezug auf die Drehachse (X) in eine radiale Richtung verformt wird.

2. Antriebssystem (1,1') nach Anspruch 1, wobei die Mittel (24, 24') eine Vielzahl von Prismen umfassen, die in mindestens einer ringförmigen Reihe auf der Innenfläche (20b') der radial äußeren Wand (20b) verteilt sind.

3. Antriebssystem (1,1') nach Anspruch 2, wobei die Prismen winklig gleichmäßig auf der Innenfläche (20b') der radial äußeren Wand (20b) verteilt sind.

4. Antriebssystem (1,1') nach einem der Ansprüche 1 oder 2, wobei die Prismen durch die Zylinder (23, 23') mittels mindestens eines ringförmigen Elements (25, 28) betätigt werden.

5. Antriebssystem (1,1') nach einem der vorstehenden Ansprüche, wobei die Zylinder (23, 23') winklig gleichmäßig im stromabwärtigen Teilabschnitt (20) verteilt sind.

6. Antriebssystem (1,1') nach einem der vorstehenden Ansprüche, wobei die Vielzahl von Aktuatormechanismen mit mindestens einem Zylinder einen ersten Aktuatormechanismus mit mindestens einem Zylinder (23) umfasst, bei dem der Zylinder (23) konfiguriert ist, um mit den Mitteln (24, 24') derart zusammenzuwirken, dass die radial äußere Wand (20b) unter der Einwirkung einer vorbestimmten Verschiebungssteuerung in Bezug auf die Drehachse (X) in eine erste radiale Richtung verformt wird, und einen zweiten Aktuatormechanismus mit mindestens einem Zylinder (23'), bei dem der Zylinder (23') konfiguriert ist, um mit den Mitteln (24, 24') derart zusammenzuwirken, dass die radial äußere Wand (20b) unter der Einwirkung einer vorbestimmten Verschiebungssteuerung in eine zweite radiale Richtung verformt wird, die der ersten Richtung entgegengesetzt ist.

7. Antriebssystem (1,1') nach einem der vorstehenden Ansprüche, weiter umfassend Versteifungsstege (22), die die radial innere (20a) und radial äußere Wand (20b) des stromabwärtigen Teilabschnitts (20) verbinden.

8. Antriebssystem (1,1') nach einem der vorstehenden Ansprüche, wobei die Gondelverkleidung ebenfalls einen stromaufwärtigen Teilabschnitt (10) umfasst, der einen Eingangsabschnitt der Gondelverkleidung bildet, und einen mittleren Teilabschnitt (30), der den stromaufwärtigen (10) und stromabwärtigen Teilabschnitt (20) verbindet, und wobei der mittlere Teilabschnitt (30) steif ist und über mindestens einen Mast (5) mit einem Motor (6) des Antriebssystems (1,1') verbunden ist.

9. Flugzeug, **dadurch gekennzeichnet, dass** es mindestens ein Antriebssystem (1,1') nach einem der vorstehenden Ansprüche umfasst, wobei das Antriebssystem (1,1') mittels einer in Bezug auf den Rotor (2) versetzten oder durchgehenden Schwenkwelle (4, 4') schwenkbar am Flugzeug montiert ist.

## Claims

1. A propulsion system (1, 1') for an aircraft, comprising at least one rotor (2) and a nacelle fairing (3) extending around said at least one rotor (2) with respect to an axis (X) of rotation of said rotor (2), this nacelle fairing (3) comprising an upstream section forming an inlet cross-section of the nacelle fairing and a downstream section (20), a downstream end (21) of which forms an outlet cross-section (BF) of the nacelle fairing (3); and **characterised in that** the downstream section (20) comprises a radially internal wall (20a) and a radially external wall (20b) made of a deformable shape-memory material, and **in that** the radially external wall (20b) comprises a plurality of actuator mechanisms with at least one cylinder (23, 23'), each actuator mechanism being operable independently of the other actuator mechanisms and being configured to cooperate with means (24, 24') embedded in an internal surface (20b') of the radially external wall (20b) so as to deform the radially external wall (20b) in a radial direction with respect to the axis (X) of rotation, under the effect of a predetermined displacement command.

2. The propulsion system (1, 1') according to claim 1, wherein the means (24, 24') comprise a plurality of prisms distributed on the internal surface (20b') of the radially external wall (20b) in at least one annular row.

3. The propulsion system (1, 1') of claim 2, wherein the prisms are angularly equidistant on the internal surface (20b') of the radially external wall (20b).

4. The propulsion system (1, 1') according to any of claims 1 or 2, wherein the prisms are actuated by the cylinders (23, 23') by means of at least one annular element (25, 28).

5. The propulsion system (1, 1') according to any of the preceding claims, wherein the cylinders (23, 23') are angularly equidistant in the downstream section (20).

6. The propulsion system (1, 1') according to any of the preceding claims, wherein the plurality of actuator mechanisms with at least one cylinder comprises a first actuator mechanism with at least one cylinder (23) wherein the cylinder (23) is configured to cooperate with the means (24, 24') so as to deform the radially external wall (20b) in a first radial direction relative to the axis (X) of rotation, under the effect of a predetermined displacement command, and a second actuator mechanism with at least one cylinder (23'), wherein the cylinder (23') is configured to cooperate with the means (24, 24') so as to deform the radially external wall (20b) in a second direction, which is opposite to the first direction, under the effect of a predetermined displacement command.

7. The propulsion system (1, 1') according to one of the preceding claims, further comprising stiffening bridges (22) connecting the radially internal (20a) and radially external (20b) walls of the downstream section (20).

8. The propulsion system (1, 1') according to one of the preceding claims, wherein the nacelle fairing also comprises an upstream section (10) forming an inlet cross-section of the nacelle fairing and an intermediate section (30) connecting the upstream (10) and downstream (20) sections, and wherein the intermediate section (30) is rigid and is connected by at least one mast (5) to an engine (6) of the propulsion system (1, 1').

9. An aircraft **characterised in that** it comprises at least one propulsion system (1, 1') according to any one of the preceding claims, the propulsion system (1, 1') being mounted so as to pivot on the aircraft by means of a pivot shaft (4, 4') that is offset from or passes through the rotor (2).
